# EUROPEAN PATENT APPLICATION

(11) **EP 4 378 812 A1**
(43) Date of publication of application: **05.06.2024**
(21) Application number: 22211106.4
(22) Date of filing: 02.12.2022
(51) Int. Cl.: B63B 21/50

(54) **MOORING SYSTEM STATUS MONITORING FOR FLOATING OFFSHORE WIND TURBINE**

(71) Applicant: Siemens Gamesa Renewable Energy A/S, 7330 Brande (DK)
(72) Inventor: Nielsen, Jesper Kjaer, 8600 Silkeborg (DK); Cavichioli Gonzaga, Carlos Alberto, 7100 Vejle (DK)
(74) Representative: SGRE-Association

(57) **Abstract**

A method of monitoring a mooring system (10) of a floating offshore installation, FOI, (100) that is moored by the mooring system (10) is provided. The method comprises obtaining parameters related to a position of the FOI, wherein the parameters include at least mooring system parameters that are indicative of a region (15) within which a position of the For is expected to lie. The method further includes obtaining position measurements of an actual position (11) of the FOI, and deriving, from the obtained parameters and from the position measurements of the FOI, a state of the mooring system (10) of the FOI.

## Description

### FIELD OF THE INVENTION

The present invention relates to a method of monitoring a mooring system of a floating offshore installation, to a method of operating a floating offshore wind turbine (FOWT) and to a respective monitoring system. It further relates to a computer program for monitoring a mooring system of a floating offshore installation.

### BACKGROUND

Floating offshore installations (FOI), and in particular floating offshore wind turbines (FOWT) are generally attached to the sea bed by a mooring system to provide station-keeping. Station-keeping is important to ensure that the movements of a FOWT are constrained to a small prescribed region and the intended orientation of a floater of the FOWT is maintained. Different floater types exist, and they may be classified into different categories, such as semi-submersible type, spar type, tension leg platform type or barge type. Besides providing station-keeping, the tendons of a tension leg platform may also ensure that the turbine does not capsize. For semi-submersible, spar type or barge type FOWTs, the mooring system generally only provides station-keeping, but affects the dynamics of the turbine. A broken mooring line may for example result in an increased turbine load and may reduce the performance. It is generally necessary to protect the FOWT when such failure of a mooring system occurs, for example by a protection function. It is therefore desirable that a failure of the mooring system can be detected reliably.

For detecting a failure of a mooring line, the document WO 2022/017834 A1 describes for example the measurement of strain in the mooring system, or the providing of an electrical signal through the mooring system to determine if the mooring lines are intact. Whereas such solutions provide a reliable monitoring of the mooring system, they may require additional equipment to be installed and may thus result in increased costs. Also, such additional means for monitoring the mooring lines may also fail in the harsh seawater environment.

### SUMMARY

Accordingly, there is a need to improve the monitoring of a mooring system of a floating offshore installation, and in particular to provide a reliable monitoring that is relatively simple to implement. It is also desirable to avoid the need to use additional sensors.

This need is met by the features of the independent claims. The dependent claims describe embodiments of the invention.

According to an embodiment of the invention, a method of monitoring a mooring system of a floating offshore installation (FOI) that is moored by the mooring system is provided. The method comprises obtaining parameters related to a position of the FOI, wherein the parameters include at least mooring system parameters that are indicative of a region within which a position of the FOI is expected to lie. It further comprises obtaining position measurements of an actual position of the FOI and deriving, from the obtained parameters and from the position measurements of the FOI, a state of the mooring system of the FOI.

Such method may allow a precise monitoring of the mooring system of the FOI, so that a failure may be detected without the need for additional dedicated sensors. Further, the monitoring may allow keeping the mooring system parameters up-to-date so that changes to a mooring system, such as to mooring line length or anchor positions, may be detected and may further be taken into account when monitoring the state of the mooring system, for example for failure detection. Monitoring the mooring system in such way may thus be more cost-effective and may further be less prone to sensor failure. Unlike dedicated sensors in a mooring system that are subjected to the harsh conditions in seawater, a sensor that obtains the position measurement for the FOI can for example be placed inside the tower or a nacelle of a wind turbine where they are protected from such harsh conditions. Position and motion sensors are generally cheap, mature and widespread sensor technologies.

Further such position and/or motion sensor may already be present on the FOI, so that no additional sensors may be needed.

In an embodiment, obtaining position measurements of an actual position of the FOI comprises obtaining a measured absolute position of the FOI and/or obtaining measurements of the actual position using a satellite based position measurement (for example GPS, GLONASS, or GALILEO, or any global navigation satellite system, GNSS) and/or a motion reference unit (MRU) based position measurement. Position measurements may thus be obtained in a simple and cost-efficient manner.

The mooring system parameters may include parameters of one or more elements of the mooring system (e.g. of an anchor and/or of a mooring line) that restrict the motion of the FOI (that may for example limit the positions at which the FOI can be located, i.e. define an area in which the FOI can be located). The mooring system parameters may for example comprise at least an anchor position and/or a mooring line length of one, two, three or more anchor assemblies of the mooring system. The anchor position and mooring line length generally restrict the motion of the FOI, and if plural such anchor assemblies are provided, movement of the FOI may be restricted to a relatively small area. By making use of such mooring system parameters that define such area and the actual position measurements, the state of the mooring system may be derived precisely and efficiently.

In an example, one or more, preferably all, of the mooring system parameters may be provided in the form of probability density functions (PDFs). By making use of PDFs, instead of fixed values, an expected accuracy of the parameter values may be taken into account (for example via the width of the respective distribution). An error distribution of the parameters (e.g. of initial anchor positions and mooring line lengths) may in particular be taken into account. By taking error uncertainties into account, the robustness of detecting the state of the mooring system may be increased.

The parameters may further comprise one or more environmental parameters, wherein the one or more environmental parameters may preferably comprise at least one of a metocean parameter, a wind condition parameter, a wind speed, a wind direction, an oceanographic parameter, a current velocity, a current direction, a wave height, a wave periodicity, and a tidal parameter. Such environmental parameters may impact the actual position of the FOI. They may be used in an estimation of an expected position of the FOI based on the mooring system parameters, in particular to refine such expected position. Providing a precise estimation of the expected position may thus allow a more reliable determination of the state of the mooring system.

The deriving of the state of the mooring system may comprise estimating an expected position from the obtained parameters and comparing the expected position to the position measurements of the actual position of the FOI. By such method, it may be detected reliably if the mooring system parameters are not accurate and may need adjustment, and/or if a failure of the mooring system is present.

Deriving a state of the mooring system of the FOI may comprise in an exemplary embodiment the employing of a model for an expected position of the FOI, wherein the model may employ the obtained parameters, and comparing the model to the position measurements. For example, a statistical method may be used for comparing the model with the position measurements (e.g. using the position measurements as a desired outcome of the model), and/or by comparing results or expected positions provided by the model to the actual position measurements.

For example in a simple case, the model may define an area to which the position of the FOI is restricted, and the actual position measurements may be compared to this area to derive the state of the mooring system.

Deriving the state may for example comprise comparing a region within which the FOI is expected to lie with the actual position measurements for the FOI. The region within which the FOI is expected to lie may correspond to the area to which movement of the FOI is restricted by the mooring system parameters (in a simple model) or may correspond to a portion thereof (for example when employing further parameters, such as environmental parameters, in a more complex model). The region may for example correspond to a probability distribution for the FOI being in a specific position.

The probability distribution may change over time, in particular as the obtained parameters change (e.g. due to changing environmental conditions and/or changes to the calibration of the mooring system parameters).

For example, deriving the state of the mooring system may comprise deriving a probability distribution for an expected position of the FOI from the obtained parameters and comparing the actual position of the FOI to the probability distribution for the expected position of the FOI. A model that employs the obtained parameters, in particular the mooring system parameters and optionally environmental parameters, may be employed for determining the probability distribution of the expected position of the FOI. The comparison may for example be used to detect a failure of the mooring system. A failure may be detected if the actual position of the FOI does not agree with the probability distribution for the expected position, for example if the actual position is outside a region with a (predefined) minimum probability.

Preferably, the model is a statistical model for the position of the FOI. The model may for example model a position of the FOI, using a position perturbation, and may further use the mooring system parameters as constraints. A position perturbation of the model may for example include a perturbation derived from one or more environmental parameters. The position may for example be modeled from a previous position, an unconstraint perturbation, and constraints imposed by the mooring system parameters. Such model may be initialized with initial mooring system parameters that may for example be obtained when installing the FOI.

Comparing the model to the position measurements may for example comprise determining a probability for that the model matches the observed position measurements. The probability may in particular be the probability for that given the observed position measurements, the model is correct. Such probability may for example be expressed as the conditional probability P(MIX(n)), wherein M is the model (that depends on the obtained parameters) and X(n) are the obtained position measurements. Such probability may be used efficiently to indicate a failure of the mooring system; it may thus also be termed "failure probability".

Obtaining position measurements may comprise repeatedly obtaining a position measurement of the actual position of the FOI. The method may further comprise updating the probability for that the model matches the observed position measurements using the repeatedly obtained position measurements (for example as soon as they become available). Updating the probability may for example be performed by using Bayesian inference. By using such method, it may be determined fast and efficiently if the actual position of the FOI no longer matches the model, so that a failure of the mooring system may be detected reliably.

In an embodiment, deriving a state of the mooring system comprises detecting if a failure of the mooring system is present.

For example, detecting that a failure of the mooring system is present may comprise detecting that the position measurements of the actual position of the FOI differ from a position of the FOI expected from the obtained parameters. For example, a failure may be detected if the actual position differs from a region within the position is expected to lie, for example if the actual position differs from an area to which the expected position is restricted based on the mooring system parameters associated with an intact mooring system. For example, if three or more anchor assemblies are used, the mooring system parameters may restrict expected positions of the FOI to a (relatively small) area, and if the actual measured position of the FOI is (significantly) outside the area, a failure may be detected.

Preferably, the detection of such failure is based on the model. For example, it may be detected that a failure of the mooring system (such as a mooring line failure) is present if the model employs mooring system parameters for an intact mooring system and a probability that the model matches the observed position measurements drops below a threshold. Additionally or alternatively, it may be detected that a failure is present if the model employs a mooring system parameter for a failed mooring system and a probability that the model matches the observed position measurements raises above a threshold. A model for a failed mooring system may for example assume that one mooring line is broken so that the area to which the position of the FOI is restricted by the mooring system is larger; by detecting that the probability of the actual measured FOI position matching this failed mooring system model is high, a failure of the mooring system may be detected efficiently.

In an exemplary implementation, the mooring system parameters comprise intact mooring system parameters associated with an intact mooring system and one or more sets of failed mooring system parameters associated with a mooring system having a failure, such as one or more broken mooring lines. Detecting if a failure of the mooring system is present may comprise providing a model for an expected position of the FOI that employs the intact mooring system parameters, providing one or more models for an expected position of the FOI each of which employs one of the one or more sets of failed mooring system parameters (in particular a different set), determining for each model a probability that the model matches the observed position measurements, and, based on the probabilities, detecting if a failure of the mooring system is present. By matching the position measurements of the actual FOI position with plural different models for different mooring system failures and for an intact mooring system, the presence of a mooring system failure and the type of mooring system failure may be detected reliably.

For example, it may be detected that a failure of the mooring system is present by detecting that the probability for a model employing a set of failed mooring system parameters raises above a threshold, by detecting that the probability for a model employing the intact mooring system parameters drops below a threshold, and/or by detecting that the probability for a model employing a set of failed mooring system parameters raises above the probability for the model employing the intact mooring system parameters. The probability for a failed mooring system model may thus be compared to a threshold, and the threshold may be a dynamic threshold determined by the model for intact mooring system parameters. A reliable and precise failure detection may thus be achieved.

Obtaining the parameters may comprise obtaining an initial set of mooring system parameters. The initial set may preferably be obtained during installation of the mooring system. The initial parameters may be used to initialize the model.

In an embodiment, deriving a state of the mooring system of the FOI may comprise deriving updated mooring system parameters of the mooring system of the FOI. Respective updated mooring system parameters are preferably derived repeatedly during operation of the FOI. Such updated mooring system parameters may for example be derived at predetermined points in time, or after a predetermined time period has passed. They may be derived periodically.

The method may for example comprise adjusting the model based on the obtained position measurements, wherein adjusting the model may comprise updating the model based on the derived updated mooring system parameters.

By updating the mooring system parameters and/or the model, failure detection may further be improved.

For example, deriving updated mooring system parameters may comprise obtaining the position measurements by repeatedly obtaining a position measurement of the actual position of the FOI over a period of time, and updating the mooring system parameters by adjusting the model, in particular the mooring system parameters, such that the model matches the obtained position measurements. The period of time may for example be more than one day, or more than one, two, or three weeks, or even more than one month. The period of time may for example be between 0.5 and 4 months, for example 1 to 2 months. For example, after initializing the model, the position measurements may be obtained over one month or more, and may be used to update the model by updating the mooring system parameters (initial and/or subsequent calibration). After such period of time, the FOI should have traced out most of the area to which its position is restricted by the mooring system; by comparing the expected positions (i.e. the area within which the position is expected to lie due to the constraints by the mooring system) to the positions that have actually been measured, it becomes possible to update the mooring system parameters in a precise and efficient manner. An intact mooring system may be assumed for the mooring system parameters and/or the model.

Such update of the mooring system parameters may for example be performed after installation, for example after initialization of the model. The update of the mooring system parameters may be performed repeatedly during operation of the FOI, for example by assuming an intact mooring system and collecting the position measurements over the respective period of time.

The mooring system parameters may define an area to which possible positions of the FOI are restricted, and updating the mooring system parameters may comprise adjusting the mooring system parameters such that the area corresponds to the position measurements of the actual positions of the FOI.

As a particular example, deriving updated mooring system parameters may comprise deriving, from an area covered by obtained position measurements of the FOI, a curvature and/or position of a circle section bordering the area. Such circle section may correspond to a circle prescribed by an anchor and a mooring line. It may further comprise deriving from the curvature and/or position of the circle section a mooring line length and/or an anchor position, respectively, of an anchor assembly of the mooring system. This may be done for each circle section bordering the area covered by the measured actual positions of the FOI, and thus for each anchor assembly of the mooring system. An actual updated mooring line length and/or anchor position may thus be obtained.

In a preferred embodiment, adjusting the model to match the obtained position measurements may comprise adjusting the mooring system parameters to increase the probability (i.e. the probability that the model is correct given the observed position measurements of the actual FOI position). In particular, the probability (e.g. conditional probability) may be maximized.

The probability may be determined by using a numerical method. For example, a Markov chain Monte Carlo (MCMC) sampling may be used to determine the probability. By such method, the mooring system parameters may be adjusted so as to increase the probability.

Deriving the state of the mooring system may be performed repeatedly upon obtaining new position measurements of the actual position of the FOI. For example, each time new position measurements are obtained, the state of the mooring system may be derived. A fast and efficient failure detection may thereby be implemented.

The floating offshore installation, FOI, may in particular be a floating offshore wind turbine (FOWT).

By using a model, and in particular a statistical model, for the expected position of the FOI, several advantages may be achieved. For example, if a position measurement of the actual FOI position lies outside the area prescribed by the constraints due to the mooring system parameters, which can be due to a measurement error, a failure is not immediately detected. Outliers that may be due to detecting noise do thus not result in the detection of a failure. Further, since such model for the movements of the FOI can take into account environmental data, such as wind speed or direction, or current speed and direction, a failure of the mooring system may be detected even if the area prescribed by the mooring system parameters is not left by the FOI. If the equilibrium position of the FOI for example changes in a manner that is inconsistent with the wind or current direction, a failure may be detected.

In an embodiment, a method of operating a floating offshore wind turbine (FOWT) that comprises a mooring system is provided. The method comprises monitoring a status of the FOWT in accordance with any of the methods described herein. If the status of the mooring system indicates a failure of the mooring system, the method comprises performing a predefined mitigation action. By such method, an inefficient operation of the FOWT, and even damage to the FOWT may be prevented.

According to an embodiment and/or according to an independent aspect, a method for operating a floating offshore wind turbine (FOWT) is disclosed, wherein the method comprises generating, by the FOWT, electrical power and/or electrical energy, transmitting at least a part of the electrical power and/or of the electrical energy to an electrical receiving arrangement not positioned in international waters, in particular positioned on land, onshore, and supplying at least a part of the electrical power and/or of the electrical energy to a utility grid, in particular onshore utility grid.

Performing a predefined mitigation action may for example comprise one or a combination of activating an alarm, changing operation of the FOWT into a safe mode, curtailing a power output of the FOWT, stopping operation of the FOWT, disabling an up-rating mode of the FOWT (such as a power boost operating mode), enabling a down-rating mode of the FOWT (for example applying a conservative collective pitch angle offset), and providing an event notification indicative of the mooring system failure. Such notification may for example be provided via a communication connection to an operator. Damage to the wind turbine may thereby be prevented, and inspection/repair of the mooring system may be triggered.

After the mooring system has been inspected or repaired, the method may continue to operate, for example by again initializing the model, or by using a set of previous mooring system parameters.

According to a further embodiment of the invention, a system for monitoring a mooring system of a floating offshore installation that is moored by the mooring system is provided. The system for monitoring comprises an interface for obtaining parameters and position measurements (in particular the above-mentioned parameters and position measurements) of the FOI, a processing unit and a memory. The memory comprises control instructions which when executed by the processing unit cause the processing unit to perform any of the methods described herein. Such system may further comprise a control system that controls the operation of the FOI, e.g. of an FOWT, as described herein. It should be clear that the system may comprise a part that resides in the FOI, such as a control system that controls functions of the FOI, and a part that may reside remotely from the FOI (e.g. onshore), for example a part of the system that derives the state of the mooring system, e.g. by obtaining the position measurements from the FOI via a communication connection and the interface. The system may thus be a distributed system. In other embodiments, the system is fully comprised in the FOI.

According to a further embodiment, a FOWT comprising such system is provided.

A further embodiment of the invention provides a computer program for monitoring a mooring system of a FOI that is moored by the mooring system. The computer program comprises control instructions which, when executed by a processing unit of a system that monitors the mooring system, cause the processing unit to perform any of the methods described herein. Such computer program may likewise be operated remote from the FOI, or components thereof may reside on the FOI.

The computer program may be provided on a volatile or non-volatile data carrier or storage medium. The computer program may also be provided via a network connection. The computer program may be operated on any of the systems disclosed herein.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing a floating offshore wind turbine, FOWT, including a system for monitoring a mooring system according to an embodiment.
Fig. 2 is a schematic drawing showing constraints on the position of the FOWT imposed by the mooring system according to an embodiment.
Fig. 3 is a flow diagram illustrating a method of monitoring a mooring system according to an embodiment, wherein a failure of the mooring system is detected.
Fig. 4 is a diagram schematically illustrating the actual measured positions of a FOWT upon occurrence of a failure of the mooring system.
Fig. 5 is a diagram that schematically illustrates probabilities for different models for the expected position of the FOWT according to an embodiment.
Fig. 6 is a flow diagram illustrating a method of monitoring a mooring system according to an embodiment, wherein mooring system parameters are calibrated based on position measurements.
Fig. 7 is a diagram schematically illustrating the actual measured positions of a FOWT over a period of time and the constraints on the position of the FOWT imposed by the mooring system parameters.
Fig. 8 is a diagram schematically illustrating the adjustment of probability density functions that represent mooring system parameters based on the position measurements illustrated in figure 7 according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

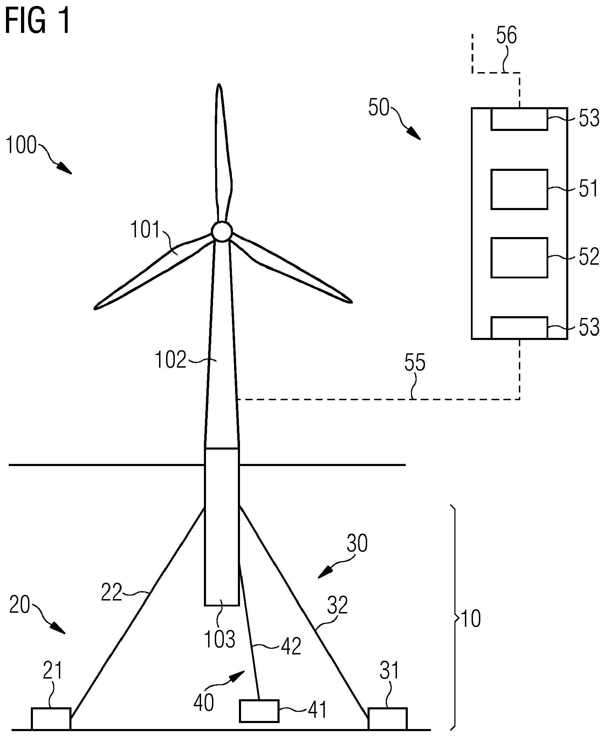

Fig. 1 schematically illustrates an FOWT 100 comprising a rotor 101, a tower 102 and a spar platform 103 that is moored by a mooring system 10 according to an embodiment. The mooring system 10 includes anchor assemblies 20, 30, 40 that include respective anchors 21, 31, 41 and mooring lines 22, 32 and 42. The mooring system 10 restricts the movement of FOWT 100.

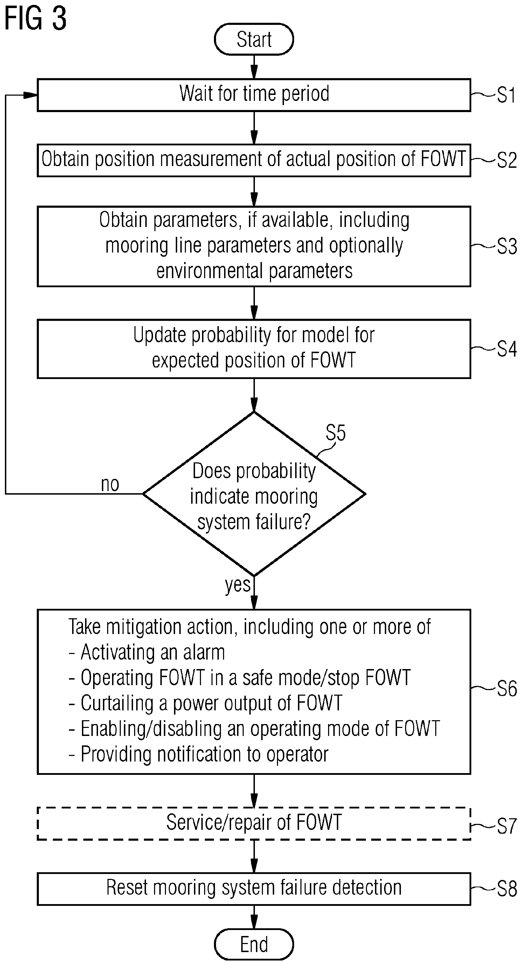

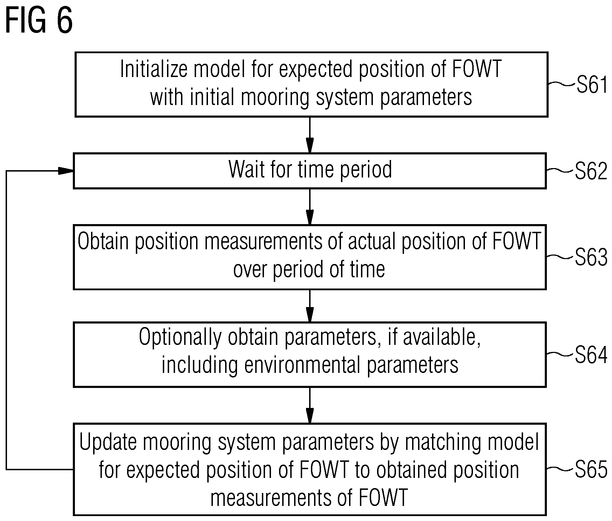

Fig. 1 further illustrates a system 50 that includes a monitoring system. The system 50 includes a processing unit 51 and a memory 52. The processing unit 51 may comprise a microprocessor, an application specific integrated circuit, a programmable logic device (PLD) such as a field programmable gate array (FPGA), a digital signal processor or the like. The memory 52 may comprise volatile and non-volatile memory, in particular a hard disc drive, SSD, flash memory, RAM, ROM, EEPROM and the like. Memory 52 may store control instructions which when executed by processing unit 51 may cause the processing unit 51 to perform any of the methods disclosed herein. The control instructions, in particular respective software code, may for example implement the method of figure 3 and/or 6. System 50, in particular the monitoring system, may comprise further components not explicitly shown, such as input/output interfaces to other data sources and to components to be controlled, a user interface including a display and an input unit, a bus coupling these components and other components common to a computer system.

The system 50 further includes interfaces 53 for data communication. Via a communication connection 55, position data measured from the FOWT 100 may for example be obtained, and control commands may be supplied to FOWT 100. For this purpose, system 50 may further include a control system. Via communication connection 56, data may be supplied to or received from external data sources, for example over a network, such as the internet. Environmental parameters may for example be obtained via communication connection 56. System 50 may be provided within FOWT 100, on a different offshore platform, on a floating vessel, or at an onshore site. System 50 may further be distributed, for example by providing the monitoring system at an onshore site and the control system within FOWT 100. Parts of the system may communicate via communication connections 55, 56. System 50 may comprise position sensors and/or environmental sensors (e.g. wind, current and/or wave sensors) located within or on the FOWT 100.

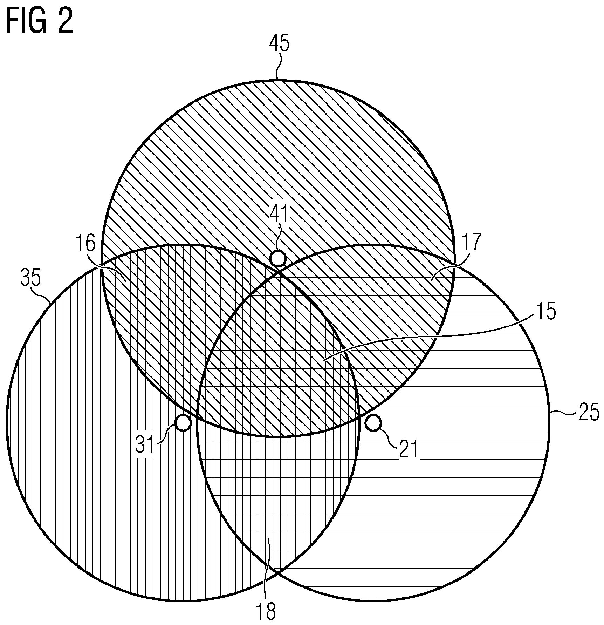

Each of the anchor assemblies 20, 30, 40 of mooring system 10 restricts the movements of FOWT 100. Fig. 2 illustrates respective circles around the positions of anchors 21, 31, 41 that represent the areas 25, 35, 45 to within each anchor assembly 20, 30, 40 restricts the movement. Accordingly, if all mooring lines and anchors of mooring system 10 are intact, the movement is restricted to within the area 15, which may be designated "no failure area". If anchor assembly 20 fails, the corresponding restriction does no longer apply and the FOWT 100 can move within area 16 (that includes area 15). Similarly, movement is restricted to within areas 17 and 18 if anchor assemblies 30 and 40 fail, respectively. Should two anchor assemblies fail, then the movement is only restricted to within the respective circle 25, 35, 45 of the remaining anchor assembly. If all anchor assemblies fail, movement is no longer restricted. In embodiments, the parameters of the mooring system, in particular anchor positions and mooring line length that determine the areas 25, 35, 45 of the three anchor assemblies are employed for estimating an expected position of the FOWT. For example, a model of the FOWT position is employed, the model using the mooring system parameters as constraints. Such model may further employ environmental parameters, such as the above-mentioned wind/current conditions, wave conditions, tidal information and the like. Mooring system parameters may further comprise bridle line length, floater dimensions of the FOWT, and other parameters of the mooring system that are related to the position of the FOWT.

Furthermore, position measurements of the FOWT 100 are obtained. The absolute position of the FOWT may for example be measured using a GPS, GLONASS, GALILEO, or other satellite-based position detection system. Additionally or alternatively, a motion reference unit (MRU) may be used. Respective position and/or motion sensors may be provided within FOWT 100, for example within the nacelle or tower. Such sensors may form part of system 50, and system 50 may measure the position using these sensors.

If for sensors or parameters, a sensor error distribution or values are not directly available, estimates may be used instead.

In an embodiment, it is monitored if the FOWT moves outside the region 15 prescribed by the constraints of the mooring system parameters. If the FOWT moves outside region 15, the presence of a mooring failure may be detected. Depending on the region within which the FOWT moves, it may be determined which anchor assembly has failed. Noise in the position signal of the FOWT may however trigger the detection of a failure. It is therefore preferred to use a statistical model of the FOWT position for failure detection.

Such statistical model may be initialized with initial mooring system parameters that may be determined when installing the FOWT. The initial values may however suffer from errors. The anchor position may for example have a standard deviation of 1 m, whereas the mooring line length may have a standard deviation of 10 m. To account for such errors, probability density functions may (PDFs) be used for the mooring system parameters in a state of fixed values.

After setting the initial values, the model may be calibrated, as described further below with respect to Fig. 6. The model of the expected position of the FOWT may further employ the environmental parameters, for example as a perturbation to the position. The model may thus accurately reflect an expected position of the FOWT for an intact mooring system.

Fig. 3 illustrates an example of how such model may be used to monitor the state of the mooring system and in particular to detect if a failure is present. New data, in particular new position measurements and/or parameters, may be acquired each time period (e.g. determined by a sampling rate), which may be referred to as an epoch. In step S1, it is waited for the time period until new data becomes available. In step S2, the position measurement of the actual position of the FOWT is obtained, e.g. via the data connection or by directly measuring the position. In step S3, mooring line parameters and optionally environmental parameters are obtained. It should be clear that these do not need to be obtained every time that new position measurements are obtained, they may for example only be obtained if the respective parameters have been updated.

In step S4, a probability for the model for the expected position of the FOWT is updated. As mentioned above, a statistical model may be used to model the expected position of the FOWT. A model for the observed position may for example be constituted by a position term and a noise term, and the position term may be based on a previous position and a perturbation. Such perturbation may comprise the constraints of the mooring system parameters, and may further comprise an unconstraint perturbation due to the environmental conditions. As the parameters of this model are known, a probability can be determined for this model correctly reflecting the position of the FOWT given the actually observed position measurements of the FOWT. A respective conditional probability may for example be calculated.

Upon new data becoming available, in particular new position measurements, the probability can be updated by the new FOWT position observations. For such updating, inference, in particular Bayesian inference, may be used.

Consequently, by steps S1 to S4, the probability for the model can continuously be updated as soon as new position measurements become available.

Such probability is indicative of a failure of the mooring system, since the model is for example based on parameters of an intact mooring system, and if the probability that this model is correct based on the measured data drops below a certain threshold, a failure of the mooring system may be detected. On the other hand, it is likewise possible to construct the model for a failed mooring system, for example a model in which movement is restricted only to within one of the areas 16, 17, 18, and if the probability for such model to be correct exceeds a certain threshold, a failure may likewise be detected. Accordingly, in step S5, it is determined if the probability, which may thus be termed "failure probability", indicates a mooring system failure, such as a mooring line failure. If this is not the case, then the method continues in step S1 and acquires the next position measurement.

If a mooring system failure is detected in step S5, the method continues in step S6 with the taking of a mitigation action. Such mitigation action can include the activating of an alarm, the operating of the FOWT in a safe mode, for example stopping FOWT operation, curtailing and power output of the FOWT, enabling or disabling an operating mode of the FOWT (in particular an uprating or downrating mode), and providing a notification to an operator. It should be clear that several of these mitigation measures may be formed in parallel. In general, activating an alarm and operating the FOWT in a safe mode are performed, which may include a respective notification.

In step S7, the FOWT is serviced or repaired. It should be clear that step S7 may not form part of embodiments of the method, but may be performed by service personnel. In step S8, mooring system failure detection is reset, which may include resetting parameters of the model, for example initializing the mooring system parameters. The method may then start over with step S1.

In a particular implementation, several models are employed, wherein one model uses mooring system parameters for an intact mooring system, whereas one or more other models use mooring system parameters that correspond to a failed mooring system. In particular, for each failure mode to be detected, a respective model and mooring system parameters may be used. In the example of Fig. 2, three models for a failed mooring system may for example be employed, wherein one model restricts movement to area 16 (mooring line 22 failed), one to area 17 (mooring line 32 failed) and one to area 18 (mooring line 42 failed). A respective probability may be calculated and updated in step S4 for each of these four or more models (one for intact mooring system and three for the three failure modes).

In such embodiment, a failure of the mooring system may be detected in step S5 by either one of the models corresponding to a failed mooring system having a probability that exceeds a respective threshold, and/or the probability for the model for the intact mooring system dropping below a respective threshold. Preferably, the probabilities for the failed mooring system models are compared to the probability for the intact mooring system model, and if the intact mooring system model probability is exceeded, a failure is detected. A reliable and efficient failure detection may thereby be implemented.

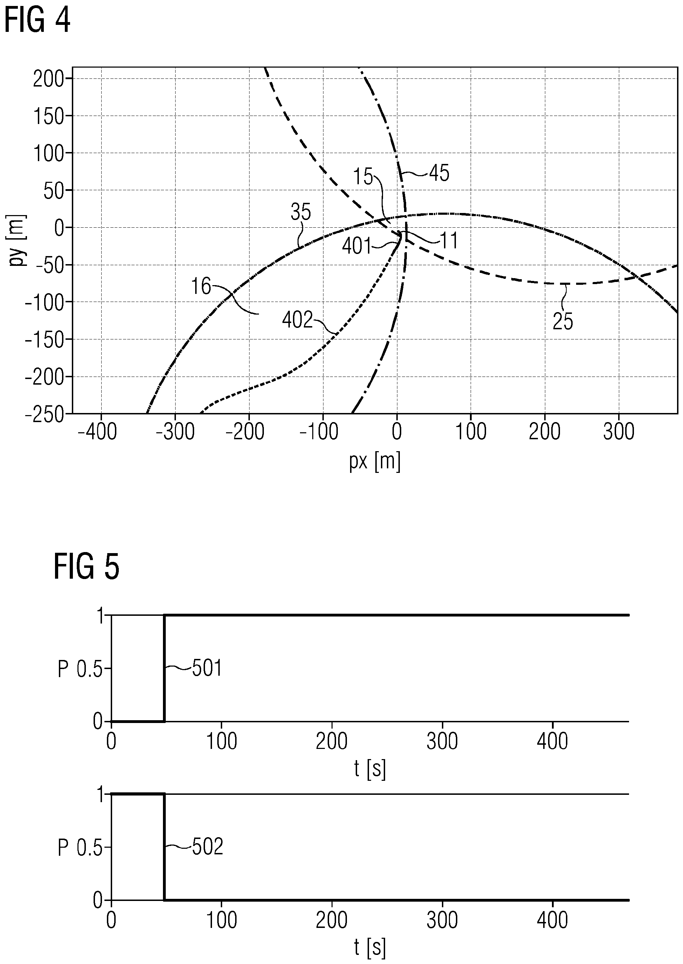

Fig. 4 illustrates an example of such failure detection. The position 11 of the FOWT is measured. As can be seen in Fig. 2, the FOWT moves along a path having a first section 401 and a second section 402. Fig. 5 illustrates the probability P determined for the model corresponding to the intact mooring system (diagram curve 502) and the probability P for a model corresponding to a failed mooring line 22 of the mooring system (diagram curve 501). As can be seen, after the FOWT has left the area 15 prescribed by the intact mooring system, the probability for the model corresponding to the intact mooring system (diagram curve 502) drops whereas the probability for the model corresponding to a failed mooring line 22 rises (diagram curve 501). The failure of mooring line 22 can thus be detected reliably. It is noted that in Fig. 4, the first section 401 of the path corresponds to the part of curves 501, 502 in which the intact mooring system model (curve 502) still has a higher probability. Section 402 of the path corresponds to the higher probability for the failed mooring system model (curve 501). As a statistical model is used, which is more tolerant to outliers, the probability only changes after the FOWT has already passed the circle 25 indicating the constraint imposed by mooring line 22.

The mooring system line parameters may suffer from a lack of precision of the initial values and may further suffer from drift or the like, for example if a mooring line lengthens or if an anchor is moved. The state of the mooring system may thus change. Monitoring the state of the mooring system may thus comprise adjusting the mooring system parameters based on the obtained parameters, in particular on the model, and the obtained position measurements of the actual position of the FOWT.

In an embodiment, the obtained position measurements are used to calibrate or adjust the mooring system parameters. For example, over a period of time, the obtained position measurements should correspond to the area 15 (Fig. 2) assuming that no mooring system failure is present. The FOWT positions will in particular over time approximately trace-out the intersection of the three circles 25, 35, 45 in Fig. 2. If the corresponding area prescribed by the current mooring system parameters does not correspond to the measured positions actually taken by the FOWT, then the mooring system parameters may be adjusted in order to align this area with the actually measured area. For example, the curvature of the circle section that borders the area is indicative of the length of the respective mooring line. Further, the position of the circular section is indicative of the anchor position of the respective anchor assembly. Thus, based on the actual position measurements of FOWT position, it is possible to adjust the mooring system parameters (e.g. anchor positions and mooring line lengths) to bring them into alignment with the actually measured FOWT positions.

However, sensor noise may be present and/or the FOWT may have only explored a small region of the area 15, for example due to wind or current conditions. To improve the calibration of the mooring system parameters, the use of a statistical model is preferred. The model may be the same or may be similar to the above-described model and may in particular take the environmental conditions into account.

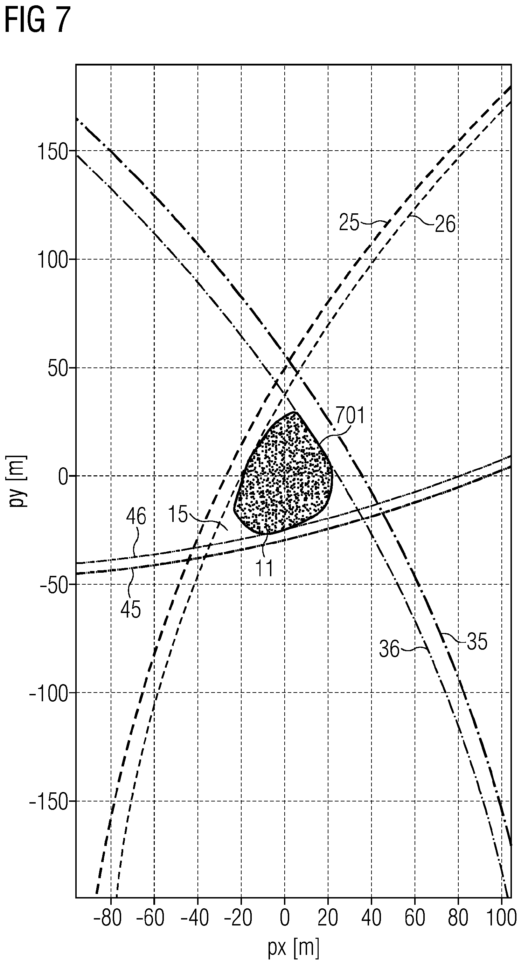

An example of a respective method is illustrated in the flow-diagram of Fig. 6. In step S61, the model for the expected position of the FOWT is initialized with the initial mooring system parameters. As the model is used to calibrate the mooring system parameters, it assumes an intact mooring system. As mentioned, anchor position and mooring line length measured during installation of the FOWT may be used for the initialization. In step S62, it is again waited for a time period, which may correspond to an update period for updating the mooring system parameters. In step S63, position measurements of the actual position of the FOWT are obtained for a certain period of time. For example, position measurements may be collected over a period of time longer than 1, 2 or 3 weeks, preferably over a time period of between 1 and 2 months. During this time period, the FOWT should trace-out the area 15 to which its movements are restricted by the mooring system. This is exemplarily depicted in Fig. 7, wherein the positions 11 measured of the FOWT are shown. The positions appear as a dark cloud that traces-out the area 15.

In step S64, further parameters are optionally obtained, such as environmental parameters. These may be used in the statistical model for the FOWT position, as described above.

In step S65, the mooring system parameters are updated by adjusting the model for the expected FOWT position such that it matches the position measurements of the actual FOWT positions. This is illustrated in Fig. 7, wherein the circles 25, 35 and 45 indicate the initial mooring system parameters. As can be seen, the area 701 that is traced-out by the actual measured positions 11 of the FOWT is different and in particular smaller than the area defined by the intersection of the three circles. The model and in particular the mooring system parameters are thus adjusted so that the model matches the observations. In Fig. 7, this is indicated by the adjusted circles 26, 36 and 46 that correspond to the adjusted mooring system parameters. It should be noted that both anchor position and mooring line length may be adjusted.

The adjustment may occur by using statistical methods applied to the model of the expected FOWT position. For example, the conditional probability may be determined that the model including the mooring system parameters is correct given the actually observed position measurements. This probability may be maximized by varying the parameters in order to obtain an adjusted set of mooring system parameters that better matches the observation. As due to nonlinearities, the analytical expression for this probability may be difficult to derive, a numerical method may be used for deriving the probability. Such method may for example be Markov chain Monte Carlo (MCMC) sampling. In Fig. 7, such MCMC algorithm has been applied in order to derive the adjusted mooring system parameters indicated by circles 26, 36 and 46 based on the measured positions 11. As can be seen, the adjusted mooring system parameters much better reflect the area 15 in which movement of the FOWT 100 is actually restricted.

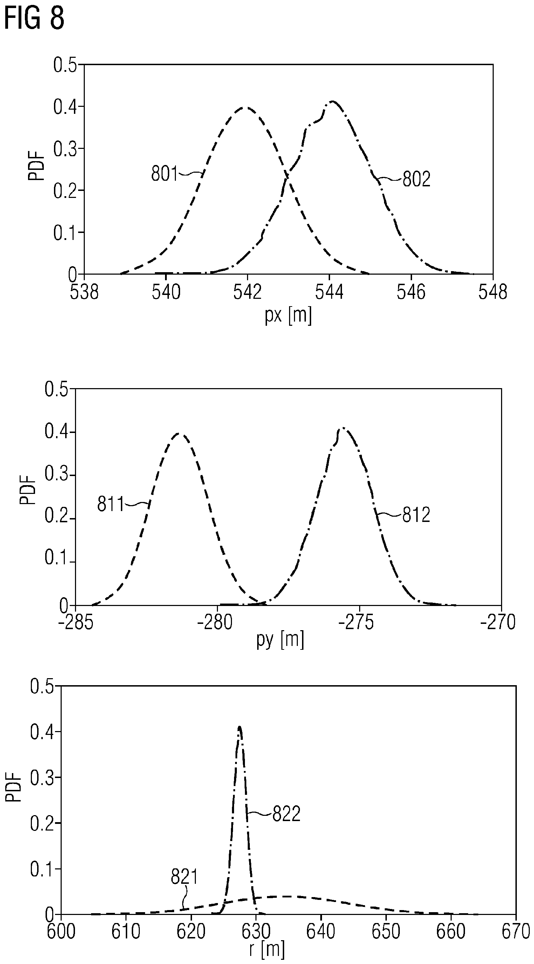

As mentioned above, the model may employ probability density functions (PDFs) for describing the mooring system parameters. This is exemplarily illustrated in Fig. 8. In the first diagram, curve 801 shows the PDF for the position px of the mooring line 22, with which the model is initialized. The second diagram of Fig. 8 shows in curve 811 the probability density function of the position py of the anchor 21 with which the model was initialized. Finally, the third diagram of Fig. 8 shows with curve 821 the probability density function of the length of the mooring line 22 with which the model was initialized. It should be clear that for the remaining anchors 31, 41 and mooring lines 32, 42, respective PDFs are provided. Fig. 8 furthermore shows the respective PDFs after the calibration/adjustment of Fig. 6 has been performed. As can be seen, the calibration has moved the position px of the anchor 21 so as to correspond to the new adjusted PDF 802. Likewise, the position PY of anchor 21 has been moved and is now represented by the adjusted PDF 812. The expected accuracy for both x and y anchor positions has been maintained by the calibration. In the third diagram of Fig. 8, it can be seen that the PDF for the mooring line length has likewise been shifted by the calibration. Furthermore, the width of the PDF (i.e. the variance) has been reduced significantly, meaning that the expected accuracy of mooring line length is higher. On the other hand, for the anchor positions, the accuracy of the estimation has remained essentially unaltered. The changes to the PDFs of the mooring system parameters illustrated in Fig. 8 correspond to the changes illustrated in Fig. 7. Since a relatively large number of position measurements are available, as shown in Fig. 7, the calibration can move the PDF position a relatively large distance away from the initial positions while maintaining accuracy.

The calibration illustrated in Fig. 6 may be performed immediately after installation of the FOWT in order to calibrate the initial values. Further, it may be repeated periodically. Accordingly, after calibrating the mooring system parameters in step S65, the method may return to step S62, where it waits for the next calibration cycle.

It should be clear that the deriving of the state of the mooring system of the FOI from the obtained position measurements preferably includes both, the failure detection illustrated in Fig. 3 and the mooring system parameter updating illustrated in Fig. 6. Preferably, after installation of the FOWT, the calibration of Fig. 6 is first performed to derive a precise state of the mooring system, in particular to derive the mooring system parameters with precision. During and/or after the initial calibration, the method of Fig. 3 is performed in order to detect a failure state of the mooring system. Both methods may employ a similar or the same model, and the mooring system parameters of the model employed by the method of Fig. 3 may be updated as soon as new mooring system parameters are determined by the method of Fig. 6. The calibration of Fig. 6 may be performed repeatedly at predetermined points in time, for example after a certain time period has passed. In other implementations, the method of Fig. 6 may be performed continuously during operation of the FOWT.

Although the above description has been given with respect to a FOWT, it should be clear that it is likewise applicable to other floating offshore installations.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

## Claims

1. A method of monitoring a mooring system (10) of a floating offshore installation, FOI, (100) that is moored by the mooring system (10), wherein the method comprises:
obtaining parameters related to a position of the FOI, wherein the parameters include at least mooring system parameters that are indicative of a region (15) within which a position of the FOI is expected to lie;
obtaining position measurements of an actual position (11) of the FOI; and
deriving, from the obtained parameters and from the position measurements of the FOI, a state of the mooring system (10) of the FOI.

2. The method according to claim 1, wherein obtaining position measurements of an actual position (11) of the FOI comprises obtaining a measured absolute position of the FOI, and/or obtaining measurements of the actual position using a satellite based position measurement and/or a motion reference unit based position measurement.

3. The method according to claim 1 or 2, wherein the mooring system parameters include parameters of one or more elements of the mooring system that restrict the motion of the FOI, wherein the mooring system parameters preferably comprise at least an anchor position and/or a mooring line length of 1, 2, 3, or more anchor assemblies (10, 20, 30) of the mooring system.

4. The method according to any of the preceding claims, wherein deriving a state of the mooring system (10) of the FOI comprises employing a model for an expected position of the FOI, wherein the model employs the obtained parameters, and comparing the model to the position measurements.

5. The method according to claim 4, wherein comparing the model to the position measurements comprises determining a probability for that the model matches the observed position measurements.

6. The method according to claim 5, wherein obtaining position measurements comprises repeatedly obtaining a position measurement of the actual position (11) of the FOI (100), and wherein the method further comprises updating the probability for that the model matches the observed position measurements using the repeatedly obtained position measurements, wherein updating the probability is preferably performed by using Bayesian inference.

7. The method according to any of the preceding claims, wherein deriving a state of the mooring system (10) comprises detecting if a failure of the mooring system (10) is present.

8. The method according to claim 7 when dependent on claim 4,
wherein it is detected that a failure of the mooring system (10) is present
if the model employs mooring system parameters for an intact mooring system and a probability that the model matches the observed position measurements drops below a threshold, and/or
if the model employs mooring system parameters for a failed mooring system and a probability that the model matches the observed position measurements raises above a threshold.

9. The method according to claim 7 or 8, wherein the mooring system parameters comprise intact mooring system parameters associated with an intact mooring system (10) and one or more sets of failed mooring system parameters associated with a mooring system (10) having a failure,
wherein detecting if a failure of the mooring system (10) is present comprises
providing a model for an expected position of the FOI (100) that employs the intact mooring system parameters;
providing one or more models for an expected position of the FOI (100) each of which employs one of the one or more sets of failed mooring system parameters;
determining for each model a probability that the model matches the observed position measurements; and
based on the probabilities, detecting if a failure of the mooring system (10) is present,
wherein it is preferably detected that a failure of the mooring system (10) is present by
detecting that the probability for a model employing a set of failed mooring system parameters raises above a threshold;
detecting that the probability for a model employing the intact mooring system parameters drops below a threshold; and/or
detecting that the probability for a model employing a set of failed mooring system parameters raises above a threshold that is based on the probability for the model employing the intact mooring system parameters.

10. The method according to any of the preceding claims, wherein deriving a state of the mooring system (10) of the FOI (100) comprises deriving updated mooring system parameters of the mooring system (10) of the FOI (100), wherein respective updated mooring system parameters are preferably repeatedly derived during operation of the FOI (100).

11. The method according to claim 10 when dependent on claim 4, wherein deriving updated mooring system parameters comprises obtaining said position measurements by repeatedly obtaining a position measurement of the actual position (11) of the FOI (100) over a period of time, and updating the mooring system parameters by adjusting the mooring system parameters such that the model matches the obtained position measurements.

12. The method according to claim 10 or 11 when dependent on claim 5, wherein matching the model to the obtained position measurements comprises adjusting the mooring system parameters to increase the probability.

13. A method of operating a floating offshore wind turbine, FOWT, (100) that comprises a mooring system (10), wherein the method comprises:
monitoring a status of the FOWT (100) in accordance with the method according to any one of the preceding claims,
if the status indicates a failure of the mooring system (10), performing a predefined mitigation action, wherein the predefined mitigation action preferably comprises one or a combination of
activating an alarm,
changing operation of the FOWT (100) into a safe mode,
curtailing the power output of the FOWT (100),
disabling an up-rating mode of the FOWT (100),
enabling a down-rating mode of the FOWT (100),
stopping operation of the FOWT (100), and
providing an event notification indicative of the mooring system failure;
and preferably wherein the method further comprises
generating, by the FOWT (100), electrical power and/or electrical energy,
transmitting at least a part of the electrical power and/or of the electrical energy to an electrical receiving arrangement not positioned in international waters, in particular positioned on land, onshore, and
supplying at least a part of the electrical power and/or of the electrical energy to a utility grid, in particular onshore utility grid.

14. A system for monitoring a mooring system (10) of a floating offshore installation, FOI, (100) that is moored by the mooring system (10), wherein the system (50) comprises an interface (53) for obtaining parameters and position measurements of the FOI (100), a processing unit (51) and a memory (52), wherein the memory (52) comprises control instructions which when executed by the processing unit (51) cause the processing unit (51) to perform any of the methods of claims 1-13.

15. A computer program for monitoring a mooring system (10) of a floating offshore installation, FOI, (100) that is moored by the mooring system (10), wherein the computer program comprises control instructions which, when executed by a processing unit (51) of a system (50) that monitors the mooring system (10), cause the processing unit (51) to perform the method of any of claims 1-13.
